# FASCICULE DE BREVET EUROPEEN

(11) **EP 0 708 599 B1**
(45) Date de publication et mention de la délivrance du brevet: **04.10.2000**
(21) Numéro de dépôt: 95918035.7
(22) Date de dépôt: 20.04.1995
(51) Int. Cl.: A21D 13/08, A21D 8/06, A21D 6/00

(54) **PROCEDE DE FABRICATION D'UN PRODUIT ALIMENTAIRE A ENVELOPPE PATISSIERE ET PRODUITS AINSI OBTENUS**
VERFAHREN ZUR HERSTELLUNG EINES NAHRUNGSMITTELS MIT EINER GEBÄCKSCHALE UND DIE SO HERGESTELLTEN PRODUKTE
METHOD FOR THE MANUFACTURE OF A FOOD PRODUCT IN A PASTRY CASE AND PRODUCTS SO OBTAINED

(30) Priorité: 20.04.1994 FR 9404717
(43) Date de publication de la demande: 01.05.1996
(73) Titulaire: SOPARIND, F-75007 Paris (FR)
(72) Inventeur: CHAUVIN, Bernard, F-49150 Baugé (FR)
(74) Mandataire: Hurwic, Aleksander
(86) Numéro de dépôt international: FR9500517
(87) Numéro de publication internationale: WO9528844

(56) Documents cités:
- EP-A- 0 172 074
- EP-A- 0 187 403
- FR-A- 2 305 349
- FR-A- 2 691 046
- GB-A- 1 272 281
- GB-A- 2 032 243

## Description

L'invention concerne un procédé de fabrication d'un produit alimentaire à enveloppe pâtissière et les produits ainsi obtenus.

On connaît de nombreux produits alimentaires comme des pâtés en croûte, des friands, des timbales, des bouchées, etc...., constitués par une enveloppe pâtissière enfermant un fourrage, une farce, ou une garniture et qui sont préparés soit à partir de croûtes cuites à blanc et ensuite garnies d'appareils divers (au sens donné à ce terme en cuisine ou en pâtisserie), soit par cuisson au four, à une température supérieure à 140°C, de l'ensemble formé par une enveloppe pâtissière du type pâte brisée, pâte feuilletée ou analogue et d'une garniture ou fourrage. Dans ce dernier cas, on constate fréquemment, une fois la cuisson terminée et le produit refroidi, qu'il existe entre l'enveloppe et la garniture un vide, lequel est comblé, par exemple pour les pâtés en croûte, par l'injection de gélatine liquide. Une telle technique n'est pas de mise en oeuvre aisée, d'une part, et ne peut pas, d'autre part, être adaptée à tous les produits comportant une enveloppe pâtissière et une garniture comme des produits pâtissiers fromagers ou pâtissiers charcutiers ou des produits à base de poissons ou d'autres fruits de mer, ou à base de végétaux, ... etc, cette adaptation étant d'autant plus difficile que le taux d'humidité des garnitures est élevé.

C'est, par conséquent, un but général de l'invention de fournir un procédé de fabrication d'un produit alimentaire à enveloppe pâtissière consommable permettant d'aboutir, après cuisson et refroidissement, à des produits de présentation excellente et ainsi attractifs sur le plan commercial pour le consommateur.

C'est, aussi, un but de l'invention de fournir un tel procédé propre à être mis en oeuvre à échelle industrielle et dans de bonnes conditions économiques.

Selon l'invention, on effectue la cuisson du produit en atmosphère humide, cette humidité provenant avantageusement des produits en cours de cuisson. Cette cuisson peut avantageusement être effectuée en moule fermé ou protégé ou encore en sacs plastiques, l'emballage étant effectué sous vide ou de manière traditionnelle. L'isolation du produit à cuire évite les échanges d'humidité entre le produit et le milieu extérieur. Toutefois, il peut s'avérer avantageux d'effectuer la cuisson en atmosphère humide dans l'enceinte du four, l'humidité améliorant l'efficacité thermique de la cuisson permettant une coagulation et/ou une pasteurisation rapide du produit. L'étanchéité du matériel et/ou de l'emballage de cuisson évite de mouiller le produit à cuire et notamment la pâte pâtissière, par exemple la pâte brisée.

Avantageusement, on effectue la cuisson simultanée d'une enveloppe pâtissière consommable et de son fourrage, sa garniture ou analogue, enfermé dans l'enveloppe. Avantageusement, le produit est doré ou frit postérieurement à la cuisson, de préférence après un refroidissement.

Un procédé de fabrication d'un produit alimentaire à enveloppe pâtissière consommable, à partir d'une abaisse de pâte foncée dans un moule et d'un fourrage, garniture ou analogue enfermé dans l'enveloppe est caractérisé, selon l'invention, en ce que l'on procède à la cuisson simultanée de ladite abaisse de pâte et de la garniture ou fourrage dans une atmosphère humide, sans que le contact direct humide soit recherché avec le produit.

Selon une autre caractéristique de l'invention la cuisson en atmosphère humide est conduite à une température inférieure à 100°C.

En variante, la cuisson est conduite en autoclave, avec contre-pression de vapeur, et à une température de l'ordre de 80-130°C.

La pâte constitutive de l'abaisse est une pâte brisée, feuilletée ou analogue et la garniture ou fourrage qu'enferme l'enveloppe est un appareil fromager, ou charcutier, ou à base de poissons, ou à base de produits de la mer, ou à base d'ovo-produits, ou du type végétal ou des combinaisons de ceux-ci ou similaires.

L'invention prévoit également, pour donner aux produits alimentaires obtenus par mise en oeuvre du procédé tel que défini ci-dessus leur aspect habituel, et après refroidissement partiel ou complet postérieur à la cuisson, une opération de "braisage de surface", dorure ou similaire, mais aussi toute autre enduction de finition présentation.

Sur des produits de petites dimensions, la finition de braisage dorure des produits par un bain d'huile, par exemple à 170°C pendant, par exemple 3 mn. La friture est particulièrement efficace pour la régularité, la rapidité de braisage ainsi que pour conserver au mieux la précision des formes.

L'invention a également pour objet les produits alimentaires obtenus par mise en oeuvre du procédé, tant sous forme, poids et dimensions permettant leur consommation individuelle que pour leur vente et débit en magasin par des traiteurs, charcutiers ou autres ou prétranchés en vente libre service.

La particularité des produits fabriqués selon l'invention comparativement aux mêmes produits fabriqués en cuisson unique et directe au four traditionnel est que le fond du produit (fond du moule) au moment de la fabrication cuisson, devient le dessus du produit en présentation finale du produit braisé ou recevant une autre finition présentation.

Il est bien entendu que la réalisation de produits dépourvus de la seconde abaisse de pâte a ne sort pas du cadre de la présente invention.

L'invention sera bien comprise par la description qui suit, faite à titre d'exemple et en référence au dessin annexé dans lequel :
- les figures 1 à 4 illustrent différentes phases du procédé selon l'invention ;
- la figure 5 montre, très schématiquement et en perspective, un produit obtenu par la mise en oeuvre du procédé de l'invention.

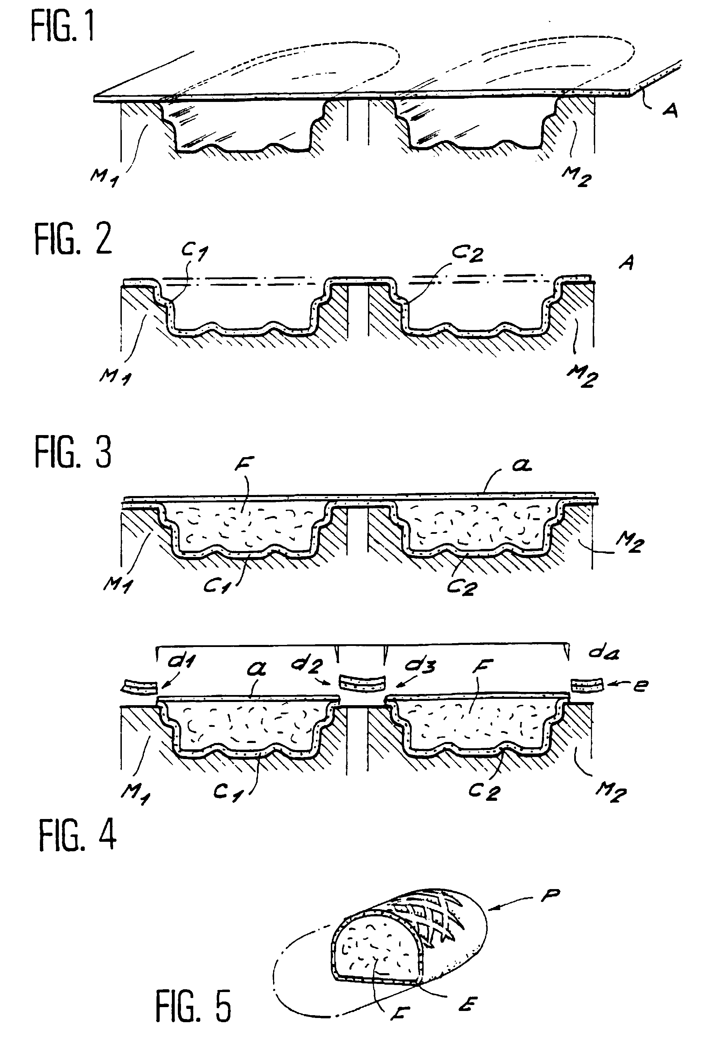

On se réfère d'abord aux figures 1 à 4 qui illustrent un procédé selon l'invention de fabrication d'un produit alimentaire à enveloppe pâtissière consommable, dans l'exemple décrit et représenté celui de fabrication d'un produit du type pâté en croûte sans qu'aucun caractère limitatif ne soit cependant attaché à cette description.

Comme montré sur la figure 1, une abaisse A de pâte brisée, feuilletée, pâte de riz ou autre est déposée sur des moules en creux, M₁, M₂... avantageusement métalliques et qui correspondent à la forme souhaitée pour le produit à fabriquer. L'abaisse de pâte A est ensuite foncée dans les moules et la condition est alors celle montrée sur la figure 2 en laquelle la pâte A ménage des coquilles de pâte C₁, C₂, etc..., propres à être remplies d'un fourrage, remplissage, garniture ou analogue, par exemple dans le cas décrit et représenté d'un pâté en croûte, une farce à cuire ou précuite. Après remplissage des coquilles C₁, C₂, à l'aide du fourrage F, on dispose sur lesdites coquilles une seconde abaisse de pâte a laquelle est soudée sur les bords périphériques des coquilles C par simple application d'une pression ou par une étape de pré-cuisson avec ou sans agent de liaison. La condition est alors celle montrée sur la figure 3. Les produits ainsi formés, remplis et fermés sont ensuite séparés les uns des autres par découpe des abaisses de pâte A et a sur les bords des coquilles, comme montré en d₁, d₂, d₃, d₄ et l'excédent de pâte, s'il y a, comme montré en e, est recyclé.

Conformément à l'invention, les coquilles C garnies de fourrage F et fermées par l'abaisse a sont alors soumises à un traitement de cuisson en atmosphère humide environnant le produit à une température inférieure à 100°C.

En variante, la cuisson est effectuée dans un appareillage du type autoclave à une température de l'ordre de 80 à 130°C avec contre-pression de vapeur.

On obtient alors, dans ces conditions de cuisson, des produits P (figure 5) qui présentent, après refroidissement, une très bonne juxtaposition et/ou adhérence de l'enveloppe E au fourrage ou remplissage F qu'elle enferme.

Le procédé selon l'invention, où la cuisson est conduite à une température inférieure à celle mise en oeuvre pour les produits similaires dans les fours usuels (de l'ordre de 140°C et très souvent au delà de 180-200°C) procure ainsi non seulement de façon simple des produits d'aspect satisfaisant pour le consommateur, mais entraîne aussi une diminution d'énergie consommée qui abaisse d'autant le coût des produits fabriqués.

L'opération de cuisson telle que décrite ci-dessus peut être complétée, ensuite, et après refroidissement des produits, par une opération de "finition", comme habituel dans le domaine de ces produits alimentaires et qui peut être, par exemple, une opération de "braisage de surface" ou de "dorure" ou encore une enduction à froid ou à chaud, qui confère aux produits leur aspect final habituel.

Au contraire, la friture appliquée sur une enveloppe pâtissière, telle que, par exemple, une pâte brisée, avantageusement réalisée sur des produits de faibles dimensions formant des portions individuelles, permet de réaliser un produit ayant des qualités organoleptiques originales et un aspect inhabituel.

Le procédé selon l'invention peut être mis en oeuvre pour les produits les plus divers, tant par leur composition que par leur poids, comme il apparaît des exemples ci-après.

### EXEMPLE N° 1

On prépare un produit pâtissier-charcutier, du type pâté en croûte, à partir d'une pâte pâtissière et d'une farce de composition charcutière à base de porc.

La pâte brisée abaissée à une épaisseur de 3 mm est foncée dans un moule métallique circulaire de 250 mm de diamètre et dont le fond présente des motifs en creux et relief. Dans le moule ainsi foncé de pâte, on introduit la farce de composition charcutière et d'un poids de 3 kg.

Après remplissage complet du moule, celui-ci est fermé par une abaisse de pâte d'une épaisseur de 3 mm et le moule est clos par un couvercle ou enfermé dans un sac plastique étanche. L'ensemble est alors porté dans un bain Marie où règne une température de 80 à 95°C et en atmosphère de vapeur d'eau.

Après une cuisson de 5 h, on retire l'ensemble du bain-marie, on dispose le produit dans une armoire ventilée permettant de ramener rapidement la température au coeur à moins de 10°C et on conserve le produit ainsi refroidi en chambre froide à température de 4-5°C.

Le produit est retiré du moule pour être soumis à une opération de braisage de surface par passage au four traditionnel.

Le volume important de la farce, dont la température à coeur est de l'ordre de 5°C permet de conduire le traitement de braisage sans qu'il y ait surcuisson de la pâte pâtissière ou dudit fourrage.

Le produit pâtissier-charcutier du type pâté en croûte ainsi obtenu montre, lorsqu'il est découpé, une parfaite adhérence de la farce ou fourrage, et de l'enveloppe pâtissière.

### EXEMPLE N° 2

On a préparé un produit pâtissier-fromager du type fromage en croustade à partir d'une pâte pâtissière et d'une farce de composition fromagère à base d'emmental de lait écrémé et de crème.

La pâte feuilletée abaissée à une épaisseur de 4 mm est foncée dans un moule métallique de forme carrée à bord festonné (15 cm x 15 cm x 4 cm). Dans le moule ainsi foncé de pâte, est introduite la composition laitière fromagère pour un poids de 0,800 kg.

Après remplissage du moule, celui-ci est fermé par une abaisse de pâte feuilletée d'une épaisseur de 3 mm et le moule est clos par un couvercle ou enfermé dans un sac plastique étanche. L'ensemble est placé en étuve ventilée, fortement humide (hygrométrie voisine de 100 %) où règne une température de 90 à 95°C en atmosphère vapeur d'eau.

Après une cuisson de 2 h 30, on retire l'ensemble de l'étuve pour refroidir à température ambiante de l'atelier (12 à 14°C). On peut conserver, ensuite, le produit en chambre froide à + 4° ou + 5°C.

De préférence, le produit est démoulé, partiellement refroidi, pour conduire une opération de braisage de la surface à l'aide d'un four traditionnel à une température supérieure à 200°C ou par rampe de chauffage à rayonnement direct sur le produit. C'est à ce stade de finition du produit que s'exprimera la spécificité de la pâte feuilletée.

Dans son volume, la farce doit être suffisamment froide (température maximum de 15°C) pour éviter l'effet de surcuisson de celle-ci pendant l'opération rapide de braisage ou encore pour s'éloigner des effets négatifs d'une cuisson complète et directe au four traditionnel, c'est-à-dire, une température élevée de la farce à coeur, supérieure à 50°C, ce qui engendrerait un risque de décollement soufflage de l'enveloppe pâtissière et par ailleurs augmenterait les risques majeurs de développement bactériologique dans le produit.

### EXEMPLE N° 3

On a préparé un produit "pâtissier-légumes" de type mini-croustades, amuses-gueules, à partir d'une pâte céréalière utilisée comme matière d'enveloppage A d'une autre matière de garniture B, laquelle est une pâte souple formulée à partir de légumes, plus des protéines de soja, plus des protéines de lait.

La matière d'enveloppage A est placée dans l'une des trémies d'une machine à co-extruder à diaphragme quand la matière B est placée dans l'autre trémie de la même machine à co-extruder.

Selon le principe de fonctionnement bien connu de ce type de machine, en choisissant dans leurs formes et leurs dimensions les buses d'extrusion, combinées entre elles pour la sortie simultanée d'une garniture centrale de matière B et d'une enveloppe extérieure de matière A ; nous fabriquons des produits de forme relativement sphérique de 3 cm de diamètre et d'un poids unitaire d'environ 30 g.

Nous utilisons dans ce cas une fonction existante sur la machine, qui permet de refermer le produit sur lui-même. C'est la matière d'enveloppage A soudée sur elle-même qui enferme la matière B. Depuis le tapis de sortie de la machine à co-extruder, ces produits sont repris pour être placés dans des moules de forme décorative, ludique, dans lesquels se fera la cuisson humide de ces produits.

Pour cette cuisson humide, le produit sera protégé par un couvercle ou un film plastique afin d'éviter le contact direct avec la vapeur d'eau utilisée comme source de chauffage ; laquelle humidifierait trop la pâte céréalière et la dégraderait.

La cuisson est faite en tunnel de vapeur à 90'C pendant 50 min.

Les produits sortis de cuisson sont immédiatement refroidis jusqu'à 50°C, démoulés automatiquement en continu et refroidis complémentairement jusqu'à 6°C, le refroidissement complémentaire ramenant le produit démoulé de 50° à 6°C, permet de bien assécher l'ensemble de la surface du produit, ce qui facilite l'opération de "finition-présentation" du produit (dans le cas présent pulvérisation liquide d'une dorure à l'oeuf puis braisage).

Après refroidissement à 6°C, le produit peut :
- être entreposé en chambre froide à + 4°C ou + 5°C en attendant l'opération de finition braisage ;
- ou passer directement en finition braisage.

Après braisage ou friture, le produit est une nouvelle fois refroidi à + 4°C. Il est ainsi prêt à être conditionné.

### EXEMPLE N° 4

On a préparé un produit "pâtissier produit de la mer" de type mini-saucisses cocktail, fabriqué par la technique de co-poussage sous boyau.

A partir d'une pâte céréalière (pâte à pain non fermentaire) que l'on appellera matière d'enveloppage A et d'une autre matière de garniture B (charcuterie de poisson), nous avons fabriqué des mini-saucisses d'un poids de 10 g, par co-poussage en boyau.

Dans cette réalisation, la pâte céréalière A est en contact direct et intime avec le boyau, lequel permet la mise en forme des produits. Cette mise en forme se fera en utilisant un portionneur-torsionneur, de type connu, pour les produits embossés.

Ce boyau remplira aussi la fonction de moule fermé, protégeant le produit du contact direct de la vapeur d'eau de cuisson, afin d'éviter l'humidification excessive de l'enveloppe A.

Ces produits mis en forme et restant liés entre eux sous forme de chapelets passeront en cuisson dans un circuit continu, en ambiance humide à la température de 90°C pendant 30 min, le couple temps/température est choisi pour atteindre dans le produit la valeur pasteurisatrice souhaitée.

A la sortie cuisson, les produits encore chauds seront débarrassés, automatiquement, de leur boyau, puis refroidis rapidement en dessous de 10°C.

Les produits ainsi refroidis, comme dans les exemples précédents seront prêts pour subir l'opération de finition présentation, notamment par friture, avant d'être, de nouveau, refroidis pour être conditionnés.

## Revendications

1. Procédé de fabrication d'un produit alimentaire à enveloppe pâtissière consommable fourré d'une garniture ou analogue remplissant complètement l'enveloppe, caractérisé en ce que l'on procède à la cuisson simultanée, à une température de l'ordre de 80-130°C, de ladite enveloppe pâtissière consommable et de la garniture, fourrage ou analogue dans une atmosphère humide au moins autour du produit.

2. Procédé selon la revendication 1, caractérisé en ce qu'il comporte une étape de montage d'un produit fourré à partir d'une abaisse de pâte foncé dans un moule.

3. Procédé selon la revendication 1 ou 2, caractérisé en ce que la cuisson en atmosphère humide est conduite à une température inférieure à 100°C.

4. Procédé selon la revendication 1 ou 2, caractérisé en ce que la cuisson est conduite en autoclave, à contre-pression de vapeur.

5. Procédé selon l'une quelconque des revendications précédentes, caractérisé en ce que la cuisson en atmosphère humide est suivie, après refroidissement partiel ou complet, d'une opération de "braisage de surface", dorure ou analogue sur le produit démoulé ou non et selon le matériau composant le moule.

6. Procédé selon l'une quelconque des revendications 2 à 5, caractérisé en ce que la pâte constitutive de l'abaisse est une pâte brisée, feuilletée ou analogue et en ce que la garniture, fourrage ou analogue qu'enferme l'enveloppe est un appareil laitier, fromager, ou charcutier, ou à base de poissons, ou à base de produits de la mer, ou à base d'ovo-produits, ou du type végétal ou autre.

7. Procédé selon l'une quelconque des revendications précédentes, caractérisé en ce qu'il comporte postérieurement à la cuisson de l'enveloppe pâtissière consommable et de la garniture, fourrage ou analogue, une étape de friture.

8. Procédé selon la revendication 7, caractérisé en ce qu'il comporte, entre la cuisson et la friture, une étape de refroidissement du produit à une température inférieure à 10°C, de préférence inférieure à 5°C.

9. Produit alimentaire à enveloppe pâtissière contenant un fourrage, une farce, une garniture ou analogue comme un pâté en croûte, un friand, une bouchée, une timbale,... etc, susceptible d'être obtenu par mise en oeuvre du procédé selon l'une quelconque des revendications précédentes, caractérisé en ce que l'enveloppe pâtissière enferme complètement et intimement le fourrage, la farce, la garniture et analogue.

## Patentansprüche

1. Verfahren zur Herstellung eines Lebensmittelproduktes mit einer eßbaren Backhülle, die mit einer Beilage bzw. Füllung oder ähnlichem, das die Hülle vollständig ausfüllt, gefüllt ist, dadurch gekennzeichnet, daß ein gleichzeitiges Backen bei einer Temperatur im Bereich von 80 - 130 °C der eßbaren Backhülle und der Füllung oder dergleichen in einer zumindest um das Produkt feuchten Atmosphäre erfolgt.

2. Verfahren nach Anspruch 1, dadurch gekennzeichnet, daß es einen Zubereitungsschritt eines gefüllten Produktes ausgehend von einem ausgerollten Teig umfaßt, der in eine Form eingelegt wird.

3. Verfahren nach Anspruch 1 oder 2, dadurch gekennzeichnet, daß das Backen in feuchter Atmosphäre bei einer Temperatur von unter 100 °C erfolgt.

4. Verfahren nach Anspruch 1 oder 2, dadurch gekennzeichnet, daß das Backen in einem Druckkessel bei Dampfgegendruck erfolgt.

5. Verfahren nach einem der vorhergehenden Ansprüche, dadurch gekennzeichnet, daß auf das Backen in feuchter Atmosphäre nach dem teilweisen oder vollständigen Abkühlen ein Vorgang des "Oberflächenschmorens", Vergoldens oder dergleichen auf dem aus der Form entnommenen oder nicht entnommenen Produkt, je nach Material, aus dem die Form besteht, folgt.

6. Verfahren nach einem der Ansprüche 2 bis 5, dadurch gekennzeichnet, daß der ausgerollte Teig ein Mürbeteig, Blätterteig oder dergleichen ist, und dadurch, daß die Beilage, Füllung oder dergleichen, die sich in der Hülle befindet, eine Milch-, Käse- oder Fleischmischung ist oder auf der Basis von Fisch oder Meeresfrüchten oder Eierprodukten oder Gemüseprodukten oder anderem beruht.

7. Verfahren nach einem der vorhergehenden Ansprüche, dadurch gekennzeichnet, daß es nach dem Backen der eßbaren Backhülle und der Beilage, Füllung oder dergleichen einen Fritierschritt umfaßt.

8. Verfahren nach Anspruch 7, dadurch gekennzeichnet, daß es zwischen dem Backen und dem Fritieren einen Schritt für das Abkühlen des Produktes auf eine Temperatur von unter 10 °C, vorzugsweise von unter 5 °C, umfaßt.

9. Lebensmittelprodukt mit Backhülle, die eine Füllung, Hackfüllung, Beilage oder dergleichen enthält, wie eine Pastete im Teigmantel, eine kleine Blätterteigpastete, ein Blätterteiggefäß, einen Auflauf usw., das durch die Anwendung des Verfahrens nach einem der vorhergehenden Ansprüche erzeugt werden kann, dadurch gekennzeichnet, daß die Backhülle die Füllung, die Hackfüllung, die Beilage und dergleichen fest und ganz umschließt.

## Claims

1. A method of manufacturing a food product having an edible case of pastry or the like and filled with a filling that fills the case completely, the method being characterized in that said edible case and the filling are cooked simultaneously at a temperature of the order of 80°C to 130°C in an atmosphere that is moist, at least around the food product.

2. A method according to claim 1, characterized in that it includes a step of making up a stuffed food product from an undercrust pressed into a mold.

3. A method according to claim 1 or 2, characterized in that cooking in a moist atmosphere is performed at a temperature of less than 100°C.

4. A method according to claim 1 or 2, characterized in that cooking is performed in an autoclave, with steam pressure.

5. A method according to any preceding claim, characterized in that cooking in a moist atmosphere is followed, after partial or complete cooling, by an operation of "salamandering", browning, or the like performed on the product after unmolding or otherwise, and depending on the material constituting the mold.

6. A method according to any one of claims 2 to 5, characterized in that the pastry constituting the undercrust is a short pastry, a puff pastry, or the like, and in that the filling enclosed in the case is based on milk, cheese, pigmeat, fish, seafood, egg products, plants, etc.

7. A method according to any preceding claim, characterized in that it includes a frying step subsequent to the cooking of the edible case together with its filling.

8. A method according to claim 7, characterized in that between cooking and frying it includes a step of cooling the food product to a temperature of less than 10°C, and preferably of less than 5°C.

9. A food product having a case of pastry or the like containing a filling, such as a meat pie, a sausage roll, a vol-au-vent, a timbale, etc., ..., suitable for being obtained by implementing the method according to any preceding claim, the food product being characterized in that the case completely and intimately encloses the filling.
